# EUROPEAN PATENT APPLICATION

(11) **EP 4 440 017 A1**
(43) Date of publication of application: **02.10.2024**
(21) Application number: 23207919.4
(22) Date of filing: 06.11.2023
(51) Int. Cl.: H04L 1/00, H04L 1/04, H04J 11/00, H04L 5/00

(54) **APPARATUS, SYSTEM, AND METHOD OF COMMUNICATING A DATA FIELD OF A PHYSICAL LAYER (PHY) PROTOCOL DATA UNIT (PPDU) OVER A PLURALITY OF CHANNEL BANDWIDTH (BW) SEGMENTS**

(30) Priority: 30.03.2023 US 202318193340
(71) Applicant: INTEL Corporation, Santa Clara, CA 95054 (US)
(72) Inventor: KENNEY, Thomas J., Portland, OR 97229 (US); CARIOU, Laurent, 29290 Milizac (FR); FANG, Juan, Portland, OR 97225 (US)
(74) Representative: Viering, Jentschura & Partner mbB Patent- und Rechtsanwälte

(57) **Abstract**

For example, a wireless communication station (STA) may be configured to generate a plurality of encoded-modulated data streams based on a data field of a PPDU to be transmitted over a channel BW. For example, the plurality of encoded-modulated data streams may be configured based on a plurality of channel BW segments in the channel BW. For example, the plurality of encoded-modulated data streams may include a first encoded-modulated data stream according to a first Modulation and Coding Scheme (MCS) corresponding to a first channel BW segment, and a second encoded-modulated data stream according to a second MCS, e.g., different from the first MCS, corresponding to a second channel BW segment. For example the STA may be configured to transmit a plurality of transmissions based on the plurality of encoded-modulated data streams over the plurality of channel BW segments.

## Description

### TECHNICAL FIELD

Aspects described herein generally relate to communicating a data field of a Physical layer (PHY) Protocol Data Unit (PPDU) over a plurality of channel bandwidth (BW) segments.

### BACKGROUND

Devices in a wireless communication system may be configured to utilize communications over an increased channel bandwidth, for example, in order to support increased throughput. For example, a wireless communication station may be configured to communicate over channel bandwidths of 80 Megahertz (MHz), 160MHZ, or more.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a multi-link communication scheme, which may be implemented in accordance with some demonstrative aspects.
Fig. 3 is a schematic illustration of a multi-link communication scheme, which may be implemented in accordance with some demonstrative aspects.
Fig. 4 is a schematic illustration of a Physical layer (PHY) Protocol Data Unit (PPDU) format, which may be implemented in accordance with some demonstrative aspects.
Fig. 5 is a schematic flow-chart illustration of a method of communicating a data field of a Physical layer (PHY) Protocol Data Unit (PPDU) over a plurality of channel bandwidth (BW) segments, in accordance with some demonstrative aspects.
Fig. 6 is a schematic flow-chart illustration of a method of communicating a data field of a PPDU over a plurality of channel BW segments, in accordance with some demonstrative aspects.
Fig. 7 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020) ;* and/or IEEE 802.11be (*IEEE P802.11be*/*D2.0 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), May 2022*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBeeTM, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band.

Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mm Wave frequency band. In one example, mm Wave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

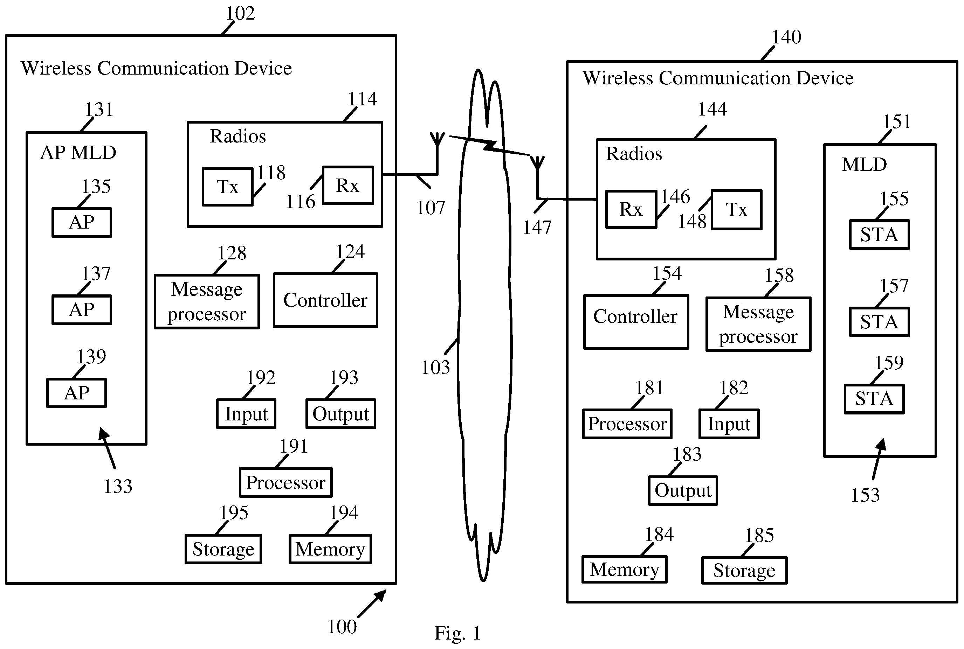

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, and/or one or more other devices.

In some demonstrative aspects, devices 102 and/or 140 may include a mobile device or a non-mobile, e.g., a static, device.

For example, devices 102 and/or 140 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102 and/or 140 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternative include one or more channels in an mm Wave wireless communication frequency band.

In other aspects, WM 103 may include any other type of channel over any other frequency band.

In some demonstrative aspects, device 102 and/or device 140 may include one or more radios including circuitry and/or logic to perform wireless communication between devices 102, 140 and/or one or more other wireless communication devices. For example, device 102 may include one or more radios 114, and/or device 140 may include one or more radios 144.

In some demonstrative aspects, radios 114 and/or 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S 1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or the one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102 and/or device 140 may include, operate as, perform the role of, and/or perform one or more functionalities of, one or more STAs. For example, device 102 may include at least one STA and/or device 140 may include at least one STA.

In some demonstrative aspects, device 102 and/or device 140 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102 and/or device 140 may be configured to perform one or more operations, and/or functionalities of a WiFi 8 STA.

In other aspects, for example, devices 102 and/or 140 may be configured to perform one or more operations, and/or functionalities of an Ultra High Reliability (UHR) STA.

In other aspects, for example, devices 102 and/or 140 may be configured to perform one or more operations, and/or functionalities of any other additional or alternative type of STA.

In other aspects, device 102 and/or device 140 may include, operate as, perform the role of, and/or perform one or more functionalities of, any other wireless device and/or station, e.g., a WLAN STA, a WiFi STA, and the like.

In some demonstrative aspects, device 102 and/or device 140 may be configured operate as, perform the role of, and/or perform one or more functionalities of, an access point (AP), e.g., an EHT AP STA and/or a UHR AP STA.

In some demonstrative aspects, device 102 and/or device 140 may be configured to operate as, perform the role of, and/or perform one or more functionalities of, a non-AP STA, e.g., an EHT non-AP STA and/or a UHR non-AP STA.

In other aspects, device 102 and/or device 140 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF).The AP may perform any other additional or alternative functionality.

In some demonstrative aspects devices 102 and/or 140 may be configured to communicate in an EHT network, a UHR network, and/or any other network.

In some demonstrative aspects, devices 102 and/or 140 may be configured to operate in accordance with one or more Specifications, for example, including one or more *IEEE 802.11 Specifications,* e.g., an *IEEE 802. 11-2020 Specification,* an *IEEE 802.11be Specification,* and/or any other specification and/or protocol.

In some demonstrative aspects, device 102 and/or device 140 may include, operate as, perform a role of, and/or perform the functionality of, one or more multi-link logical entities, e.g., as described below.

In other aspect, device 102 and/or device 140 may include, operate as, perform a role of, and/or perform the functionality of, any other entities, e.g., which are not multi-link logical entities.

For example, a multi-link logical entity may include a logical entity that contains one or more STAs. The logical entity may have one MAC data service interface and primitives to the logical link control (LLC) and a single address associated with the interface, which can be used to communicate on a distribution system medium (DSM). For example, the DSM may include a medium or set of media used by a distribution system (DS) for communications between APs, mesh gates, and the portal of an extended service set (ESS). For example, the DS may include a system used to interconnect a set of basic service sets (BSSs) and integrated local area networks (LANs) to create an extended service set (ESS). In one example, a multi-link logical entity may allow STAs within the multi-link logical entity to have the same MAC address. The multi-link entity may perform any other additional or alternative functionality.

In some demonstrative aspects, device 102 and/or device 140 may include, operate as, perform a role of, and/or perform the functionality of, a Multi-Link Device (MLD). For example, device 102 may include, operate as, perform a role of, and/or perform the functionality of, at least one MLD, and/or device 140 may include, operate as, perform a role of, and/or perform the functionality of, at least one MLD, e.g., as described below.

For example, an MLD may include a device that is a logical entity and has more than one affiliated STA and has a single MAC service access point (SAP) to LLC, which includes one MAC data service. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102 and/or device 140 may be configured to operate as, perform the role of, and/or perform one or more functionalities of, an AP MLD.

In some demonstrative aspects, device 102 and/or device 140 may be configured to operate as, perform the role of, and/or perform one or more functionalities of, a non-AP MLD.

In other aspects, device 102 and/or device 140 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In one example, a multi-link infrastructure framework may be configured as an extension from a one link operation between two STAs, e.g., an AP and a non-AP STA.

In some demonstrative aspects, controller 124 may be configured to cause, trigger, instruct and/or control device 102 to operate as, perform a role of, and/or perform one or more operations and/or functionalities of, an AP MLD 131 including a plurality of AP STAs 133, e.g., including an AP STA 135, an AP STA 137 and/or an AP STA 139. In some aspects, as shown in Fig. 1, AP MLD 131 may include three AP STAs. In other aspects, AP MLD 131 may include any other number of AP STAs.

In one example, AP STA 135, AP STA 137 and/or AP STA 139 may operate as, perform a role of, and/or perform one or more operations and/or functionalities of, an EHT AP STA. In other aspects, AP STA 135, AP STA 137 and/or AP STA 139 may perform any other additional or alternative functionality.

In some demonstrative aspects, for example, the one or more radios 114 may include, for example, a radio for communication by AP STA 135 over a first wireless communication frequency channel and/or frequency band, e.g., a 2.4GHz band, as described below.

In some demonstrative aspects, for example, the one or more radios 114 may include, for example, a radio for communication by AP STA 137 over a second wireless communication frequency channel and/or frequency band, e.g., a 5GHz band, as described below.

In some demonstrative aspects, for example, the one or more radios 114 may include, for example, a radio for communication by AP STA 139 over a third wireless communication frequency channel and/or frequency band, e.g., a 6GHz band, as described below.

In some demonstrative aspects, the radios 114 utilized by APs 133 may be implemented as separate radios. In other aspects, the radios 114 utilized by APs 133 may be implemented by one or more shared and/or common radios and/or radio components.

In other aspects, controller 124 may be configured to cause, trigger, instruct and/or control device 102 to operate as, perform a role of, and/or perform one or more operations and/or functionalities of, any other additional or alternative entity and/or STA, e.g., a single STA, multiple STAs, and/or a non-MI,D entity.

In some demonstrative aspects, controller 154 may be configured to cause, trigger, instruct and/or control device 140 to operate as, perform a role of, and/or perform one or more operations and/or functionalities of, an MLD 151 including a plurality of STAs 153, e.g., including a STA 155, a STA 157 and/or a STA 159. In some aspects, as shown in Fig. 1, MLD 151 may include three STAs. In other aspects, MLD 151 may include any other number of STAs.

In one example, STA 155, STA 157 and/or STA 159 may operate as, perform a role of, and/or perform one or more operations and/or functionalities of, an EHT STA. In other aspects, STA 155, STA 157 and/or STA 159 may perform any other additional or alternative functionality.

In some demonstrative aspects, for example, the one or more radios 144 may include, for example, a radio for communication by STA 155 over a first wireless communication frequency channel and/or frequency band, e.g., a 2.4GHz band, as described below.

In some demonstrative aspects, for example, the one or more radios 144 may include, for example, a radio for communication by STA 157 over a second wireless communication frequency channel and/or frequency band, e.g., a 5GHz band, as described below.

In some demonstrative aspects, for example, the one or more radios 144 may include, for example, a radio for communication by STA 159 over a third wireless communication frequency channel and/or frequency band, e.g., a 6GHz band, as described below.

In some demonstrative aspects, the radios 144 utilized by STAs 153 may be implemented as separate radios. In other aspects, the radios 144 utilized by STAs 153 may be implemented by one or more shared and/or common radios and/or radio components.

In some demonstrative aspects, controller 154 may be configured to cause, trigger, instruct and/or control MLD 151 to operate as, perform a role of, and/or perform one or more operations and/or functionalities of, a non-AP MLD. For example, STA 155, STA 157 and/or STA 159 may operate as, perform a role of, and/or perform one or more operations and/or functionalities of, a non-AP EHT STA.

In some demonstrative aspects, controller 154 may be configured to cause, trigger, instruct and/or control MLD 151 to operate as, perform a role of, and/or perform one or more operations and/or functionalities of, an AP MLD. For example, STA 155, STA 157 and/or STA 159 may operate as, perform a role of, and/or perform one or more operations and/or functionalities of, an AP EHT STA.

In other aspects controller 154 may be configured to cause, trigger, instruct and/or control device 140 to operate as, perform a role of, and/or perform one or more operations and/or functionalities of, any other additional or alternative entity and/or STA, e.g., a single STA, multiple STAs, and/or a non-MI,D entity.

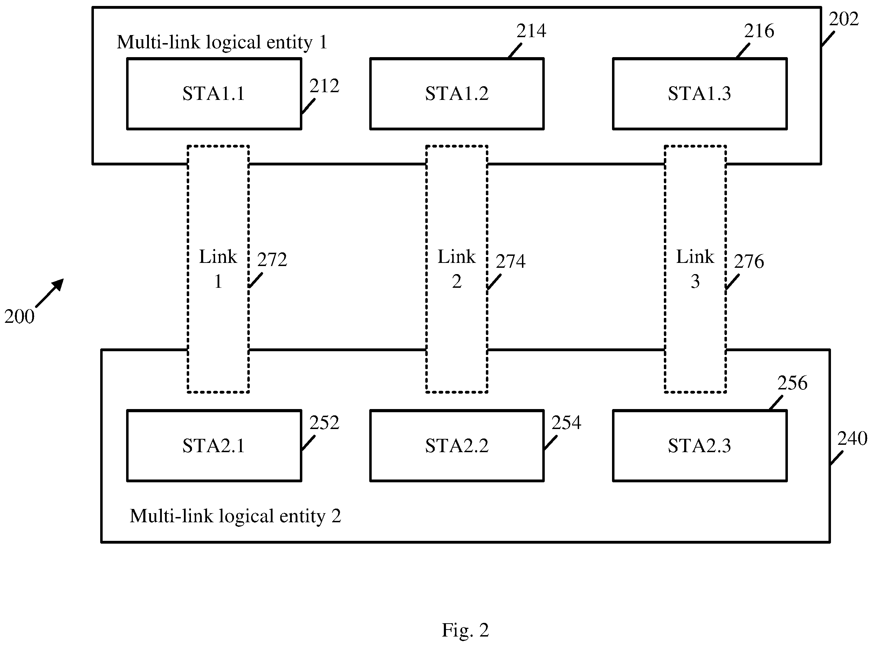

Reference is made to Fig. 2, which schematically illustrates a multi-link communication scheme 200, which may be implemented in accordance with some demonstrative aspects.

As shown in Fig. 2, a first multi-link logical entity 202 ("multi-link logical entity 1"), e.g., a first MLD, may include a plurality of STAs, e.g., including a STA 212, a STA 214, and a STA 216. In one example, AP MLD 131 (Fig. 1) may perform one or more operations, one or more functionalities, the role of, and/or the functionality of, multi-link logical entity 202.

As shown in Fig. 2, a second multi-link logical entity 240 ("multi-link logical entity 2"), e.g., a second MLD, may include a plurality of STAs, e.g., including a STA 252, a STA 254, and a STA 256. In one example, MLD 151 (Fig. 1) may perform one or more operations, one or more functionalities, the role of, and/or the functionality of, multi-link logical entity 240.

As shown in Fig. 2, multi-link logical entity 202 and multi-link logical entity 240 may be configured to form, setup and/or communicate over a plurality of links, for example, including a link 272 between STA 212 and STA 252, a link 274 between STA 214 and STA 254, and/or a link 276 between STA 216 and STA 256.

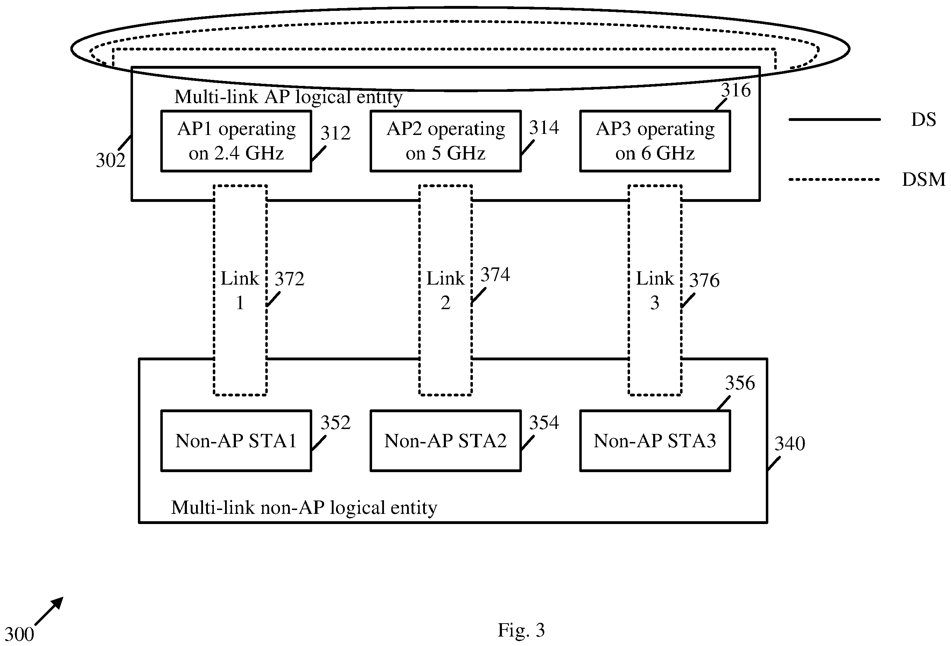

Reference is made to Fig. 3, which schematically illustrates a multi-link communication scheme 300, which may be implemented in accordance with some demonstrative aspects.

As shown in Fig. 3, a multi-link AP logical entity 302, e.g., an AP MLD, may include a plurality of AP STAs, e.g., including an AP STA 312, an AP STA 314, and an AP STA 316. In one example, AP MLD 131 (Fig. 1) may perform one or more operations, one or more functionalities, the role of, and/or the functionality of, multi-link AP logical entity 302.

As shown in Fig. 3, a multi-link non-AP logical entity 340, e.g., a non-AP MLD, may include a plurality of non-AP STAs, e.g., including a non-AP STA 352, a non-AP STA 354, and a non-AP STA 356. In one example, MLD 151 (Fig. 1) may perform one or more operations, one or more functionalities, the role of, and/or the functionality of, multi-link non-AP logical entity 340.

As shown in Fig. 3, multi-link AP logical entity 302 and multi-link non-AP logical entity 340 may be configured to form, setup and/or communicate over a plurality of links, for example, including a link 372 between AP STA 312 and non-AP STA 352, a link 374 between AP STA 314 and non-AP STA 354, and/or a link 376 between AP STA 316 and non-AP STA 356.

For example, as shown in Fig. 3, multi-link AP logical entity 302 may include a multi-band AP MLD, which may be configured to communicate over a plurality of wireless communication frequency bands. For example, as shown in Fig. 3, AP STA 312 may be configured to communicate over a 2.4GHz frequency band, AP STA 314 may be configured to communicate over a 5GHz frequency band, and/or AP STA 316 may be configured to communicate over a 6GHz frequency band. In other aspects, AP STA 312, AP STA 314, and/or AP STA 316, may be configured to communicate over any other additional or alternative wireless communication frequency bands.

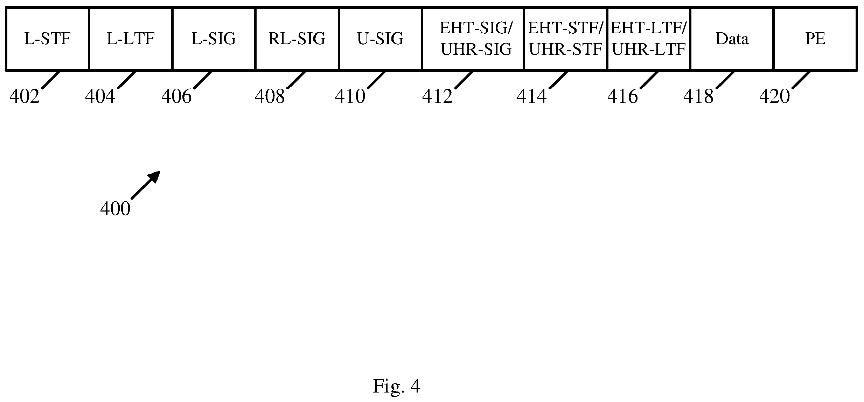

Reference is made to Fig. 4, which schematically illustrates a PPDU format 400, which may be implemented in accordance with some demonstrative aspects. In one example, device 102 (Fig. 1) and/or device 140 (Fig. 1) may be configured to generate, transmit, receive and/or process one or more PPDUs having the structure and/or format of PPDU 400.

In one example, device 102 (Fig. 1), and/or device 140 (Fig. 1) may communicate PPDU 400, for example, as part of a transmission over a channel, e.g., an EHT channel and/or a UHR channel, having a channel bandwidth including one or more 20MHz channels, for example, a channel BW of 20MHz, a channel BW of 40MHz, a channel BW of 80MHz, a channel BW of 160MHz, a channel BW of 320MHz, and/or any other additional or alternative channel BW, e.g., as described below.

In some demonstrative aspects, PPDU 400 may include an EHT PPDU configured according to an EHT format, e.g., decodable by EHT STAs.

In some demonstrative aspects, PPDU 400 may include a UHR PPDU configured according to a UHR format, e.g., decodable by UHR STAs.

In some demonstrative aspects, PPDU 400 may include an SU PPDU, e.g., an EHT SU PPDU or a UHR SU PPDU, which may be utilized for transmission from a STA, e.g., a STA implemented by device 102 (Fig. 1), to another STA, e.g., a STA implemented by device 140 (Fig. 1).

In some demonstrative aspects, PPDU 400 may include an MU PPDU, e.g., an EHT MU PPDU or a UHR MU PPDU, which may be utilized for transmission from a STA, e.g., a STA implemented by device 102 (Fig. 1), to a plurality of users, for example, including one or more STAs, including a STA implemented by device 140 (Fig. 1).

In some demonstrative aspects, as shown in Fig. 4, PPDU 400 may include a non-High Throughput (non-HT) (legacy) Short Training Field (STF) (L-STF) 402, followed by a non-HT (Legacy) Long Training Field (LTF) (L-LTF) 404, which may be followed by a non-HT Signal (SIG) (L-SIG) field 406.

In some demonstrative aspects, as shown in Fig. 4, PPDU 400 may include a repeated non-HT SIG (RL-SIG) field 408, which may follow the L-SIG field 406. The RL-SIG field 408 may be followed by a Universal SIG (U-SIG) field 410.

In some demonstrative aspects, as shown in Fig. 4, PPDU 400 may include a plurality of version-specific fields, e.g., following the U-SIG field 410.

In some demonstrative aspects, the plurality of version-specific fields may include a plurality of EHT-modulated fields.

In some demonstrative aspects, the plurality of version-specific fields may include a plurality of UHR-modulated fields.

In some demonstrative aspects, as shown in Fig. 4, the EHT modulated fields may include, for example, an EHT Signal (EHT-SIG) field 412.

In some demonstrative aspects, as shown in Fig. 4, the EHT modulated fields may include, for example, an EHT STF (EHT-STF) field 414, e.g., following the EHT-SIG field 412.

In some demonstrative aspects, as shown in Fig. 4, the EHT modulated fields may include, for example, an EHT LTF (EHT-LTF) field 416, e.g., following the EHT-STF field 414.

In some demonstrative aspects, as shown in Fig. 4, the UHR modulated fields may include, for example, a UHR Signal (UHR-SIG) field 412.

In some demonstrative aspects, as shown in Fig. 4, the UHR modulated fields may include, for example, a UHR STF (UHR-STF) field 414, e.g., following the UHR-SIG field 412.

In some demonstrative aspects, as shown in Fig. 4, the UHR modulated fields may include, for example, a UHR LTF (UHR-LTF) field 416, e.g., following the UHR-STF field 414.

In some demonstrative aspects, as shown in Fig. 4, the version specific fields may include, for example, a data field 418, e.g., following the EHT/UHR-LTF field 416, and/or a Packet Extension (PE) field 420, e.g., following the data field 418.

In some demonstrative aspects, PPDU 400 may include some or all of the fields shown in Fig. 4 and/or one or more other additional or alternative fields.

Referring back to Fig. 1, in some demonstrative aspects, device 102 and/or device 140 may be configured to generate, transmit, receive and/or process one or more transmissions, e.g., including one or more PPDUs, e.g., as described below.

In some demonstrative aspects, for example, device 102 and/or device 140 may be configured to perform one or more operations, and/or functionalities of an EHT STA and/or a UHR STA, which may be configured, for example, to generate, transmit, receive and/or process one or more transmissions, e.g., including one or more PPDUs, for example, including one or more fields according to the PPDU format of Fig. 4, any other PPDU format, and/or any other additional or alternative fields.

In some demonstrative aspects, device 102 and/or device 140 may be configured to generate, transmit, receive and/or process an EHT PPDU, e.g., in accordance with an *IEEE 802.11be Specification* and/or any other specification, e.g., as described below.

In some demonstrative aspects, device 102 and/or device 140 may be configured to generate, transmit, receive and/or process a UHR PPDU, e.g., in accordance with future UHR and/or WiFi 8 Specification and/or any other specification.

In some demonstrative aspects, for example, device 102 and/or device 140 may be configured to perform one or more operations, and/or functionalities of an EHT STA, which may be configured, for example, to generate, transmit, receive and/or process an EHT PPDU, for example, in accordance with the PPDU formal 400 (Fig. 4).

In some demonstrative aspects, for example, device 102 and/or device 140 may be configured to perform one or more operations, and/or functionalities of a UHR STA, which may be configured, for example, to generate, transmit, receive and/or process a UHR PPDU, for example, in accordance with the PPDU formal 400 (Fig. 4).

In some demonstrative aspects, for example, device 102 and/or device 140 may be configured to perform one or more operations, and/or functionalities of an EHT STA, which may be configured, for example, to generate, transmit, receive and/or process the EHT PPDU, for example, over a 20MHz channel width, a 40MHz channel width, a 80MHz channel width, a 160MHz channel width, and/or a 320Mhz channel width.

In some demonstrative aspects, for example, device 102 and/or device 140 may be configured to perform one or more operations, and/or functionalities of a UHR STA, which may be configured, for example, to generate, transmit, receive and/or process a UHR PPDU, for example, over a 20MHz channel width, a 40MHz channel width, a 80MHz channel width, a 160MHz channel width, and/or a 320Mhz channel width.

In other aspects, any other additional or alternative channel width may be utilized.

In some demonstrative aspects, for example, device 102 and/or device 140 may be configured to perform one or more operations, and/or functionalities of a WiFi 8 STA.

In other aspects, device 102 and/or device 140 may be configured to perform one or more operations, and/or functionalities of any other type of STA, which may be configured, for example, to generate, transmit, receive and/or process one or more transmissions, e.g., including one or more PPDUs, according to any other additional or alternative PPDU format.

In some demonstrative aspects, device 102 and/or device 140 may be configured to utilize communications over an increased channel bandwidth. For example, device 102 and/or device 140 may be configured to communicate over channel bandwidths of 20Megahertz (MHz), 40MHz, 80MHz, 160MHZ, 320MHz, or more.

In other aspects, device 102 and/or device 140 may be configured to communicate over any other additional or alternative channel bandwidth.

In some demonstrative aspects, device 102 and/or device 140 may be configured to implement a PPDU communication technique, which may be configured to provide a technical solution to one or more technical issues, which may be related to wireless communication over an increased channel bandwidth, e.g., as described below.

For example, in some use cases, scenarios, deployments and/or implementations, wireless communication over an increased channel bandwidth may result in an increased likelihood of interference affecting at least part of the channel bandwidth being used form the wireless communication.

For example, wider bandwidth transmissions may have a higher likelihood that parts of the channel bandwidth will be experiencing some type of deep fading, interference, and/or any other disturbance, which may not be controlled and, accordingly, may not be likely to be mitigated.

For example, in some use cases, scenarios, deployments and/or implementations, it may be likely that parts of a wide channel bandwidth may be better suited for high-rate communications, for example, while other parts of the wide channel bandwidth may be less suited, for example, due to environment characteristics, propagation characteristics, Overlapping Basic Service Set (BSS) (OBSS) interference, unknown interference, and/or any other additional or alternative type of interference.

For example, in some use cases, scenarios, deployments and/or implementations, one or more portions of a channel bandwidth may suffer interference, which may be caused, for example, due to the channel environment, activity on a subchannel, e.g., by an OBSS, and/or any other additional or alternative interference, which may be unknown and may affect only part of the channel bandwidth.

For example, in some use cases, scenarios, deployments and/or implementations, the OBSS interference experienced by a STA may be a function of a network of the STA and a relative position of the STA to its AP and/or to one or more APs of the OBSS.

For example, in some use cases, scenarios, deployments and/or implementations, the interference to one or more portions of a channel bandwidth may be from other Wi-Fi signals, and/or signals of other wireless technologies, which may be presently implemented and/or implemented in the future. In one example, in some use cases, scenarios, deployments and/or implementations, interference to one or more portions of a channel bandwidth may be caused from cellular technologies, Bluetooth technologies, Ultra-Wideband (UWB) technologies, and/or any other wireless technologies.

In one example, in some use cases, scenarios, deployments and/or implementations, wireless communication, e.g., according to a Wi-Fi technology, over a channel bandwidth in a 5GHz band and/or a 6GHz band, may be susceptible to interference from one or more other technologies, which may also utilize these bands.

In another example, in some use cases, scenarios, deployments and/or implementations, with the adoption of 6GHz technologies, along with Multi-Link Operation (MLO), where two or more bands may be used, e.g., as described above, it may be more likely that propagation characteristics may affect the relative performance of the two bands.

For example, in some use cases, scenarios, deployments and/or implementations, a link adaptation mechanism may not be able to provide a suitable, e.g., optimized, performance level, for example, in cases where one or more parts of a channel bandwidth are affected by interference.

For example, the link adaptation mechanism may be configured with respect to using a same selected Modulation and Coding Scheme (MCS) over the entire channel bandwidth, e.g., based on feedback. In one example, the link adaptation mechanism may be limited to utilizing the same MCS over the entire channel and over all spatial streams of the transmission.

Accordingly, choosing a correct bandwidth and MCS with link adaption may still lead to a suboptimal use of the full band available.

For example, in case of interference affecting a subchannel of a larger channel, the link adaptation mechanism may be implemented to select the MCS for an entirety of the larger channel, for example, such that transmission over the larger channel may still be possible, for example, in cases where the interference is present and not capturing the receiver over the subchannel. However, the MCS utilized over the larger channel may be restricted by the interference in the subchannel.

In one example, transmission over a relatively wide channel bandwidth, e.g., a 320MHz transmission, may be possible, while overall link quality may be reduced, for example, due to interference from an OBSS in at least one of the 20MHz subchannels in the 320MHz channel, which may reduce the overall Signal to Interference Noise Ratio (SINR). For example, one solution may be puncturing the subchannel with the interference, and/or reducing the overall bandwidth to use a smaller overall bandwidth. However, this solution may not be efficient.

In some demonstrative aspects, device 102 and/or device 140 may be configured to implement one or more operations and/or functionalities of a PPDU communication technique (also referred to as a "multi-MCS channel BW segmentation" technique), which may be configured to selectively control an MCS utilized over a plurality of segments of a channel bandwidth for communication of a PPDU, e.g., as described below.

In some demonstrative aspects, the multi-MCS channel BW segmentation may be configured to provide a technical solution to utilize a plurality of channel BW segments (sub-channels) within a single transmission over a channel BW, for example, such that different MCSs may be utilized on two or more of the sub-channels, e.g., as described below.

In some demonstrative aspects, device 102 and/or device 140 may be configured to implement one or more operations and/or functionalities of a PPDU communication technique, which may be configured to provide a technical solution to support selection and/or control of an MCS on a per channel bandwidth segment of the channel bandwidth for communication of the PPDU, e.g., as described below.

In some demonstrative aspects, device 102 and/or device 140 may be configured to implement one or more operations and/or functionalities of a PPDU communication technique, which may be configured to provide a technical solution to support an ability to control MCS selection, for example, on a per subchannel basis, and/or on a per Resource Unit (RU) basis, e.g., as described below.

In some demonstrative aspects, device 102 and/or device 140 may be configured to implement one or more operations and/or functionalities of the PPDU communication technique, which may be configured to provide a technical solution to support efficient utilization, e.g., full utilization, of a larger channel bandwidth for communication of the PPDU, e.g., as described below.

In some demonstrative aspects, device 102 and/or device 140 may be configured to implement one or more operations and/or functionalities of the PPDU communication technique to utilize a first MCS, e.g., a relatively lower MCS, on one or more channel bandwidth segments, e.g., sub-bands and/or RUs, for example, where interference is being experienced, e.g., as described below.

In some demonstrative aspects, device 102 and/or device 140 may be configured to implement one or more operations and/or functionalities of the PPDU communication technique to utilize a second MCS, e.g., a relatively higher MCS, on one or more channel bandwidth segments, e.g., sub-bands and/or RUs, for example, on the other subchannels, which may not be experiencing the interference, e.g., as described below.

In some demonstrative aspects, the ability to select and/or control the MCS on a per channel bandwidth segment of the channel bandwidth for communication of the PPDU may provide a technical solution to support increased overall system throughput, e.g., as described below.

In some demonstrative aspects, controller 154 may be configured to control, trigger, cause, and/or instruct a STA implemented by device 140 to generate a plurality of encoded-modulated data streams based on a data field of a PPDU to be transmitted over a channel bandwidth (BW), e.g., as described below.

In some demonstrative aspects, the channel BW may be at least 80MHz, e.g., as described below.

In some demonstrative aspects, the channel BW may be at least 160MHz, e.g., as described below.

In some demonstrative aspects, the channel BW may be at least 320MHz, e.g., as described below.

In other aspects, the channel BW may include any other channel BW, e.g., less than 80MHz.

In some demonstrative aspects, controller 154 may be configured to control, trigger, cause, and/or instruct the STA implemented by device 140 to generate the plurality of encoded-modulated data streams configured based on a plurality of channel BW segments in the channel BW, e.g., as described below.

In some demonstrative aspects, controller 154 may be configured to control, trigger, cause, and/or instruct the STA implemented by device 140 to generate the plurality of encoded-modulated data streams including a first encoded-modulated data stream according to a first MCS, for example, corresponding to a first channel BW segment, e.g., as described below.

In some demonstrative aspects, controller 154 may be configured to control, trigger, cause, and/or instruct the STA implemented by device 140 to generate the plurality of encoded-modulated data streams including a second encoded-modulated data stream according to a second MCS, for example, corresponding to a second channel BW segment, e.g., as described below.

In some demonstrative aspects, the second MCS may be different from the first MCS, e.g., as described below.

In some demonstrative aspects, controller 154 may be configured to control, trigger, cause, and/or instruct the STA implemented by device 140 to transmit a plurality of transmissions based on the plurality of encoded-modulated data streams over the plurality of channel BW segments, e.g., as described below.

In some demonstrative aspects, controller 154 may be configured to control, trigger, cause, and/or instruct the STA implemented by device 140 to transmit the plurality of transmissions including a first transmission over the first channel BW segment, for example, based on the first encoded-modulated data stream, e.g., as described below.

In some demonstrative aspects, controller 154 may be configured to control, trigger, cause, and/or instruct the STA implemented by device 140 to transmit the plurality of transmissions including a second transmission over the second channel BW segment, for example, based on the second encoded-modulated data stream, e.g., as described below.

In some demonstrative aspects, controller 154 may include suitable circuitry, for example, transmitter circuitry, e.g., PHY transmitter circuitry, which may be configured to generate the plurality of encoded-modulated data streams, and/or to transmit the plurality of transmissions based on the plurality of encoded-modulated data streams over the plurality of channel BW segments, e.g., as described below.

In some demonstrative aspects, controller 154 may include suitable encoder circuitry and/or modulator circuitry, e.g., PHY encoder circuitry and/or PHY modulator circuitry, which may be configured to generate the plurality of encoded-modulated data streams, for example, based on the plurality of channel BW segments in the channel BW, e.g., as described below.

In some demonstrative aspects, controller 154 may be configured to set and/or configure a channel BW segment of the plurality of channel BW segments to include a frequency sub-channel, e.g., as described below.

In some demonstrative aspects, controller 154 may be configured to set and/or configure a channel BW segment of the plurality of channel BW segments to include a frequency sub-channel having, for example, a sub-channel width of at least 20MHz, e.g., as described below.

In other aspects, any other sub-channel width may be implemented for the channel BW segment.

In some demonstrative aspects, controller 154 may be configured to set and/or configure a channel BW segment of the plurality of channel BW segments to include a frequency Resource Unit (RU), e.g., as described below.

In some demonstrative aspects, controller 154 may be configured to set and/or configure the plurality of channel BW segments to include a plurality of frequency sub-channels, e.g., as described below.

In some demonstrative aspects, controller 154 may be configured to set and/or configure the plurality of channel BW segments to include a plurality of RUs, e.g., as described below.

In some demonstrative aspects, controller 154 may be configured to set and/or configure the plurality of channel BW segments to include a combination of one or more frequency sub-channels and one or more RUs, e.g., as described below.

In some demonstrative aspects, controller 154 may be configured to set and/or configure the plurality of channel BW segments to include a plurality of nonoverlapping channel BW segments of the channel BW, e.g., as described below.

In some demonstrative aspects, controller 154 may be configured to set and/or configure the plurality of channel BW segments, for example, such that the plurality of channel BW segments covers an entirety of the channel BW, e.g., as described below.

In other aspects, controller 154 may be configured to set and/or configure the plurality of channel BW segments, for example, such that the plurality of channel BW segments covers only part of the channel BW, e.g., as described below.

In some demonstrative aspects, controller 154 may be configured to set and/or configure the plurality of channel BW segments, for example, such that a channel BW segment, e.g., the first channel BW segment, covers at least 40% of the channel BW, e.g., as described below.

In some demonstrative aspects, controller 154 may be configured to set and/or configure the plurality of channel BW segments, for example, such that a channel BW segment, e.g., the first channel BW segment, covers at least 50% of the channel BW, e.g., as described below.

In some demonstrative aspects, controller 154 may be configured to set and/or configure the plurality of channel BW segments, for example, such that a channel BW segment, e.g., the first channel BW segment, covers at least 75% of the channel BW, e.g., as described below.

In some demonstrative aspects, controller 154 may be configured to set and/or configure the plurality of channel BW segments, for example, such that the plurality of channel BW segments may include no more than 10 channel BW segments, e.g., as described below.

In other aspects, plurality of channel BW segments may include more than 10 channel BW segments.

In some demonstrative aspects, controller 154 may be configured to set and/or configure the plurality of channel BW segments, for example, such that the plurality of channel BW segments may include no more than 5 channel BW segments, e.g., as described below.

In other aspects, plurality of channel BW segments may include more than 5 channel BW segments.

In some demonstrative aspects, controller 154 may be configured to set and/or configure the plurality of channel BW segments, for example, such that the plurality of channel BW segments may include no more than 4 channel BW segments, e.g., as described below.

In some demonstrative aspects, controller 154 may be configured to set and/or configure the plurality of channel BW segments, for example, such that the plurality of channel BW segments may include no more than 3 channel BW segments, e.g., as described below.

In some demonstrative aspects, controller 154 may be configured to set and/or configure the plurality of channel BW segments, for example, such that the plurality of channel BW segments may include only 2 channel BW segments, e.g., as described below.

In some demonstrative aspects, controller 154 may be configured to set and/or configure the plurality of channel BW segments, for example, such that the first channel BW segment has a first predefined segment size, and/or the second channel BW segment has a second predefined segment size, e.g., as described below.

In some demonstrative aspects, controller 154 may be configured to set and/or configure the plurality of channel BW segments, for example, such that a segment size of the plurality of channel BW segments is to be equal to or greater than a predefined minimal channel BW segment size, e.g., as described below.

In some demonstrative aspects, controller 154 may be configured to control, trigger, cause, and/or instruct the STA implemented by device 140 to determine an MCS for an encoded-modulated data stream to be transmitted over a channel BW segment, for example, based on an interference level corresponding to the channel BW segment, e.g., as described below.

In some demonstrative aspects, controller 154 may be configured to control, trigger, cause, and/or instruct the STA implemented by device 140 to determine a first setting of the MCS for the encoded-modulated data stream to be transmitted over a particular channel BW segment, for example, based on a first interference level corresponding to the particular channel BW segment, e.g., as described below.

In some demonstrative aspects, controller 154 may be configured to control, trigger, cause, and/or instruct the STA implemented by device 140 to determine a second setting of the MCS for the encoded-modulated data stream to be transmitted over the particular channel BW segment, for example, based on a second interference level corresponding to the particular channel BW segment, e.g., as described below.

In some demonstrative aspects, the first setting of the MCS may include a first particular MCS, and the second setting of the MCS may include a second particular MCS, which may be lower than the first particular MCS, for example, when the second interference level corresponding to the particular channel BW segment is higher than the first interference level corresponding to the particular channel BW segment, e.g., as described below.

In some demonstrative aspects, controller 154 may be configured to control, trigger, cause, and/or instruct the STA implemented by device 140 to determine the first MCS, e.g., which is to be applied for the first encoded-modulated data stream to be transmitted over the first channel BW segment, for example, based on an interference level over the first channel BW segment, e.g., as described below.

In some demonstrative aspects, controller 154 may be configured to control, trigger, cause, and/or instruct the STA implemented by device 140 to determine the second MCS, e.g., which is to be applied for the second encoded-modulated data stream to be transmitted over the second channel BW segment, for example, based on an interference level over the second channel BW segment, e.g., as described below.

In some demonstrative aspects, controller 154 may be configured to control, trigger, cause, and/or instruct the STA implemented by device 140 to determine the first MCS to be higher, for example, than the second MCS, for example, based on a determination that an interference level over the second channel BW segment is higher than an interference level over the first channel BW segment, e.g., as described below.

In some demonstrative aspects, controller 154 may be configured to control, trigger, cause, and/or instruct the STA implemented by device 140 to determine set and/or configure one or more channel BW segments of the plurality of channel BW segments, for example, based on an interference level over the channel BW for transmission of the PPDU, e.g., as described below.

In some demonstrative aspects, controller 154 may be configured to control, trigger, cause, and/or instruct the STA implemented by device 140 to set the first channel BW segment to include a channel BW segment having an interference level below an interference threshold, e.g., as described below.

In some demonstrative aspects, controller 154 may be configured to control, trigger, cause, and/or instruct the STA implemented by device 140 to set the second channel BW segment to include a channel BW segment having an interference level above the interference threshold, e.g., as described below.

In some demonstrative aspects, controller 154 may be configured to control, trigger, cause, and/or instruct the STA implemented by device 140 to transmit channel BW segment configuration information to indicate a configuration of the plurality of channel BW segments, e.g., as described below.

In some demonstrative aspects, the channel BW segment configuration information may include channel BW segment size information, for example, to indicate a segment size of one or more channel BW segments, e.g., as described below.

In some demonstrative aspects, the channel BW segment configuration information may include channel BW segment count information, for example, to indicate a count of channel BW segments to be included in the channel BW for transmission of the PPDU, e.g., as described below.

In some demonstrative aspects, the channel BW segment configuration information may include channel BW segment allocation information, for example, to indicate an allocation of the plurality of channel BW segments to be included in the channel BW for transmission of the PPDU, e.g., as described below.

In some demonstrative aspects, the channel BW segment configuration information may include any other additional or alternative information corresponding to the configuration of the plurality of channel BW segments.

In some demonstrative aspects, controller 154 may be configured to control, trigger, cause, and/or instruct the STA implemented by device 140 to negotiate a configuration of one or more of the plurality of channel BW segments with another STA, for example, a STA implemented by device 102.

In some demonstrative aspects, controller 154 may be configured to control, trigger, cause, and/or instruct the STA implemented by device 140 to transmit a capability indication, which may be configured, for example, to indicate a capability of the STA to communicate PPDUs according to a multi-MCS channel BW segmentation, e.g., as described below.

In some demonstrative aspects, controller 154 may be configured to control, trigger, cause, and/or instruct the STA implemented by device 140 to selectively control a configuration of the transmissions over the plurality of channel BW segments, e.g., as described below.

In some demonstrative aspects, controller 154 may be configured to control, trigger, cause, and/or instruct the STA implemented by device 140 to selectively control a transmission power of the transmissions over the plurality of channel BW segments, e.g., as described below.

In some demonstrative aspects, controller 154 may be configured to control, trigger, cause, and/or instruct the STA implemented by device 140 to transmit the first transmission over the first channel BW segment according to a first transmit power, e.g., as described below.

In some demonstrative aspects, controller 154 may be configured to control, trigger, cause, and/or instruct the STA implemented by device 140 to transmit the second transmission over the second channel BW segment according to a second transmit power, for example, different from the first transmit power, e.g., as described below.

In some demonstrative aspects, controller 154 may be configured to control, trigger, cause, and/or instruct the STA implemented by device 140 to selectively control any other additional or alternative attribute of the configuration of the transmissions over the plurality of channel BW segments.

In some demonstrative aspects, controller 124 may be configured to control, trigger, cause, and/or instruct a STA implemented by device 102 to process a PPDU received over a channel bandwidth, e.g., as described below.

In some demonstrative aspects, controller 124 may be configured to control, trigger, cause, and/or instruct the STA implemented by device 102 to process the PPDU transmitted over the channel BW by the STA implemented by device 140, e.g., as described above.

In some demonstrative aspects, controller 124 may be configured to control, trigger, cause, and/or instruct the STA implemented by device 102 to identify a plurality of transmissions received over a plurality of channel BW segments of the channel BW, e.g., as described below.

In some demonstrative aspects, controller 124 may be configured to control, trigger, cause, and/or instruct the STA implemented by device 102 to process the plurality of transmissions including a first transmission over a first channel BW segment, and a second transmission over a first channel BW segment.

For example, the plurality of transmissions received over the plurality of channel BW segments of the channel BW may include the plurality of transmissions transmitted by the STA implemented by device 140, e.g., as described above.

In some demonstrative aspects, controller 124 may be configured to control, trigger, cause, and/or instruct the STA implemented by device 102 to process the plurality of transmissions to decode a data field of the PPDU, e.g., as described below.

In some demonstrative aspects, controller 124 may be configured to control, trigger, cause, and/or instruct the STA implemented by device 102 to decode the first transmission received over the first channel BW segment, for example, by decoding the first transmission according to a first MCS corresponding to the first channel BW segment.

In some demonstrative aspects, controller 124 may be configured to control, trigger, cause, and/or instruct a STA implemented by device 102 to decode the second transmission received over the second channel BW segment, for example, by decoding the second transmission according to a second MCS corresponding to the second channel BW segment.

For example, controller 124 may be configured to control, trigger, cause, and/or instruct the STA implemented by device 102 to decode the first transmission according to the first MCS applied by device 140 to generate the first transmission over the first channel BW segment, e.g., as described above.

For example, controller 124 may be configured to control, trigger, cause, and/or instruct the STA implemented by device 102 to decode the second transmission according to the second MCS applied by device 140 to generate the second transmission over the second channel BW segment, e.g., as described above.

In some demonstrative aspects, controller 124 may include suitable circuitry, for example, receiver circuitry, e.g., PHY receiver circuitry, which may be configured to demodulate and/or decode the plurality of transmissions received over the plurality of channel BW segments.

In some demonstrative aspects, controller 124 may include suitable decoder circuitry and/or demodulator circuitry, e.g., PHY decoder circuitry and/or PHY demodulator circuitry, which may be configured to demodulate and/or decode the plurality of transmissions, for example, based on the MCSs corresponding to the plurality of channel BW segments.

In some demonstrative aspects, controller 124 may be configured to control, trigger, cause, and/or instruct the STA implemented by device 102 to process channel BW segment configuration information, e.g., the channel BW segment configuration information from device 140, for example, to identify a configuration of the plurality of channel BW segments.

In some demonstrative aspects, controller 124 may be configured to control, trigger, cause, and/or instruct the STA implemented by device 102 to negotiate a configuration of one or more of the plurality of channel BW segments with the STA from which the PPDU is transmitted, e.g., the STA implemented by device 140.

In some demonstrative aspects, controller 124 may be configured to control, trigger, cause, and/or instruct the STA implemented by device 102 to transmit a capability indication to indicate a capability of the STA to communicate PPDUs according to a multi-MCS channel BW segmentation, e.g., as described below.

In some demonstrative aspects, device 102 and/or device 140 may be configured to implement one or more operations and/or functionalities of a multi-MCS channel BW segmentation technique, which may be configured to provide a technical solution to support an ability to use different MCSs on a plurality of channel BW segments, e.g., on each sub-channel and/or per RU.

In some demonstrative aspects, the ability to use different MCSs on a plurality of channel BW segments, e.g., on each sub-channel and/or per RU, may provide one or more technical advantages, for example, in cases where there is disputative operation that can be obtained in a smaller allocation.

In some demonstrative aspects, the multi-MCS channel BW segmentation technique may be configured to provide a technical solution to support a relatively large number of possibilities for defining, configuring and/or selecting the plurality of channel BW segments, e.g., as described below.

In some demonstrative aspects, the multi-MCS channel BW segmentation technique may be configured to provide a technical solution to support allocations of relatively small channel BW segments, which in turn, may support a relatively fine granularity for interference mitigation, e.g., as described below.

In some demonstrative aspects, the multi-MCS channel BW segmentation technique may be applied, for example, with respect to a relatively large channel BW, e.g., a channel BW of 320MHz, or any other channel BW.

For example, the multi-MCS channel BW segmentation technique may be applied to break up the 320MHz channel into multiple channel BW segments of relatively small sizes, e.g., including 20MHz channel BW segments and/or 40MHz channel BW segments.

For example, a plurality of MCS settings may be allocated to the plurality of channel BW segments, e.g., even on a per sub-band basis, for example, according to the size of the channel BW segments.

For example, the possibility to apply the different MCS settings, e.g., on a per channel BW segment, may provide a technical solution to support gains, for example, in cases of channel propagation characteristics, and/or due to interference.

In one example, in a 320MHz operation over a 320MHz channel BW there may be a situation where a portion of the 320MHz channel BW, e.g., a 80MHz portion of the 320MHz allocation, is determined to suffer interference, for example, OBSS interference to a particular STA, e.g., based on its location. According to this example, multi-MCS channel BW segmentation scheme may be configured, for example, such that a first MCS, e.g., a relatively lower MCS, may be used for that the "overlapping" 80MHz portion of the channel BW; and/or a second MCS, e.g., a relatively higher MCS, may be used for one or more other portions of the 320MHz channel BW. In one example, the second MCS may be used for the remaining 240MHz portion of the 320MHz BW, e.g., where the OBSS is not being used.

In some demonstrative aspects, the multi-MCS channel BW segmentation technique may be applied, for example, to further divide the channel bandwidth into one or more relatively smaller channel BW segments, e.g., at an RU granularity.

In one example, a 20 MHz channel BW may be divided into 9 sub-channels with a 26-tone RU size.

In another example, a 20 MHz channel BW may be divided into 5 sub-channels with a 52=tone RU size, and an 26-tone RU size.

In another example, a 20 MHz channel BW may be divided into 2 sub-channels with an 106-tone RU size and a 26-tone RU size.

In other aspects, one or more channel BW segments may be defined based on one or more additional or alternative suitable RU sizes, for example, for other technologies using the band, e.g., now or in the future.

In some demonstrative aspects, an AP, e.g., the AP implemented by device 102, which is part of a coordinated BSS of multiple APs, may be configured to control the over transmit power, e.g., to decrease or increase the overall power, and then to control the MCS per band, for example, such that one or more STAs on boarder areas, e.g., where a portion of the band overlaps, may be able to control interference to some extent in the overall BSS.

In some demonstrative aspects, device 102 and/or device 140 may be configured to utilize the multi-MCS channel BW segmentation technique, for example, to control, define, and/or set the MCS on a per RU basis.

In some demonstrative aspects, device 102 and/or device 140 may be configured to determine the RU size to be used, for example, based on a criterion configured to increase, e.g., optimize, data rate throughput per RU, for example, while reducing, e.g., minimizing, overhead.

In some demonstrative aspects, a level of control on the MCS and/or an achievable data rate throughout per packet may increase, for example, with a decrease in the segment size of the channel BW segments. For example, a relatively high level of control on the MCS and/or a relatively high data rate throughout per packet may be achieved with a very small channel BW segment size, e.g., where the MCS may be controlled on a per frequency sub-carrier basis. However, there may be a tradeoff between the level of granularity of the MCS control and one or more disadvantages, which may result from the reduced channel BW segment size, e.g., as described below.

In one, reducing the channel BW segment size, e.g., in order to improve the level of granularity of the MCS control, may result in an increase of an overhead and/or complexity of calculating and/or signaling channel quality measurements to support the level of granularity.

In another example, the control of MCS selection, or rate adaptation, may become much more complex, e.g., with the decrease in the channel BW segment size. For example, in case the channel is changing relatively quickly, rate adaptation may likely be too slow and may require high overhead. For example, control and overhead may improve, e.g., in case the channel is relatively stable, for example, for 100s of ms to many seconds.

In some demonstrative aspects, a multi-MCS channel BW segmentation technique, which is configured to utilize a relatively small number of channel BW segments and/or relatively wide channel BW segments, may be implemented to provide a technical solution to support a gain associated with improved MCS control, for example, while avoiding a high level of overhead and/or complexity.

In some demonstrative aspects, a multi-MCS channel BW segmentation technique may be configured to utilize channel BW segments having a size of 20MHz, 40Mhz and/or 80MHz. This configuration of the multi-MCS channel BW segmentation technique may provide a technical solution to support a gain associated with MCS control, for example, with relatively low overhead. For example, this configuration of the multi-MCS channel BW segmentation technique may provide a technical solution, which may be suitable for many use cases and/or scenarios, e.g., in scenarios where it is likely that most interference would be due to OBSS and/or operation of any other Wi-Fi devices under these channel sizes.

In some demonstrative aspects, a multi-MCS channel BW segmentation technique may be configured to utilize a relatively small number of channel BW segments, for example, no more than 5 channel BW segments, for example, nor more than 4 channel BW segments, e.g., as less as 2 channel BW segments, e.g., as described below.

In some demonstrative aspects, a multi-MCS channel BW segmentation technique may be configured to utilize one or more channel BW segments (RU channel BW segments) with a size of an RU, e.g., as described below.

In some demonstrative aspects, the multi-MCS channel BW segmentation with the RU channel BW segments may provide a technical solution to support MCS control over the plurality of RU channel BW segments, e.g., on a per RU basis. For example, the multi-MCS channel BW segmentation with the RU channel BW segments may provide a technical solution to support MCS control, which may be easier to implement and/or may not require a substantial amount of overhead, e.g., compared to an implementation of MCS control on a per subcarrier basis, e.g., depending on the RU size.

In some demonstrative aspects, the multi-MCS channel BW segmentation with the RU channel BW segments may be implemented to provide a technical solution to support MCS control with an improved granularity, for example, to adapt to harsh channel conditions and/or to mitigate other devices, e.g., known today or in the future, with smaller channel utilizations.

In some demonstrative aspects, one or more RU channel BW segments of the multi-MCS channel BW segmentation may be configured, for example, based on a minimum RU size. For example, the RU channel BW segments of the multi-MCS channel BW segmentation may be configured to have a size that is equal to or larger than a predefined minimal RU size.

In some demonstrative aspects, the multi-MCS channel BW segmentation may be configured to utilize a smallest channel BW segment (sub-channel) size of 20MHz, for example, to provide a technical solution to support adaptation for interference of OBSS devices, e.g., as described below.

In some demonstrative aspects, the multi-MCS channel BW segmentation may be configured to utilize a smallest channel BW segment (sub-channel) size of a specific RU size, for example, a size between a 26-tone RU, and a 996-tone RU and/or any other RU size, e.g., as described below.

In some demonstrative aspects, the minimal RU size may be preconfigured and/or predefined, for example, according to a specification and/or standard.

In some demonstrative aspects, the minimal RU size may be determined, signaled, and/or negotiated by a STA.

For example, the minimal RU size may be signaled and/or negotiated, for example, per AP/STA capabilities.

In some demonstrative aspects, a STA, e.g., a STA implemented by device 102 and/or a STA implemented by device 140, may be configured to signal a multi-MCS channel BW segmentation capability of the STA, e.g., to support a multi -MCS channel BW segmentation functionality/operation. For example, the STA may set a multi-MCS channel BW segmentation capability field, e.g., a multi-MCS channel BW segmentation capability bit, to a predefined value, e.g., "1" or any other value, to indicate that the STA supports the multi-MCS channel BW segmentation functionality/operation.

In some demonstrative aspects, a STA, e.g., a STA implemented by device 102 and/or a STA implemented by device 140, may be configured to signal a minimal RU size supported by the STA. For example, the STA may set a minimal RU size for multi-MCS channel BW segmentation field to indicate the minimal RU size supported by the STA.

In some demonstrative aspects, a STA, e.g., a STA implemented by device 102 and/or a STA implemented by device 140, may be configured to signal one or more configuration parameters to configure the multi-MCS channel BW segmentation operation. For example, the STA may set one or more parameters in a multi-MCS channel BW segmentation configuration field. For example, the configuration parameters to configure the multi-MCS channel BW segmentation operation may include a count of channel BW segments, a size of channel BW segments, and/or any other additional or alternative parameter to define a configuration of the multi-MCS channel BW segmentation operation.

In some demonstrative aspects, device 102 and/or device 140 may be configured to implement an architecture, for example, PHY architecture, e.g., a transmitter architecture and/or a receiver architecture, which may be configured to support the multi-MCS channel BW segmentation operation, e.g., as described below.

In some demonstrative aspects, device 102 and/or device 140 may be configured to implement a transmitter architecture, which may be configured to process a data field of a PPDU to be transmitted over a channel BW, for example, to generate a plurality of encoded-modulated streams, which may be configured based on a plurality of channel BW segments in the channel BW.

In some demonstrative aspects, the transmitter architecture may be configured to selectively and/or independently control the MCS of one or more, e.g., some or all, of the plurality of encoded-modulated streams.

In some demonstrative aspects, the transmitter architecture may be configured to generate the plurality of encoded-modulated streams according to at least two different MCSs to be applied with respect to at least two respective channel BW segments.

In some demonstrative aspects, the transmitter architecture may be configured to generate the plurality of encoded-modulated streams including a first encoded-modulated data stream according to a first MCS corresponding to a first channel BW segment, and a second encoded-modulated data stream according to a second MCS, e.g., different from the first MCS, corresponding to a second channel BW segment.

In some demonstrative aspects, the transmitter architecture may be configured to transmit a plurality of transmissions based on the plurality of encoded-modulated data streams over the plurality of channel BW segments.

In some demonstrative aspects, transmitter architecture may be configured to transmit a first transmission over the first channel BW segment based on the first encoded-modulated data stream, and a second transmission over the second channel BW segment based on the first encoded-modulated data stream.

In some demonstrative aspects, device 102 and/or device 140 may be configured to implement a receiver architecture, which may be configured to process a received data field of a PPDU received over a channel bandwidth.

In some demonstrative aspects, the receiver architecture may be configured to process a plurality of transmissions received over a plurality of channel BW segments of the channel BW.

In some demonstrative aspects, the receiver architecture may be configured to process the plurality of transmissions according to at least two different MCSs, e.g., according to the MCSs, which have been applied by a transmitter to generate the plurality of transmissions, e.g., as described above.

In some demonstrative aspects, the plurality of transmissions may include the first transmission over the first channel BW segment, and the second transmission over the second channel BW segment, e.g., as described above.

In some demonstrative aspects, the receiver architecture may be configured to decode the data field of the PPDU, for example, by decoding and demodulating the plurality of transmissions based on the MCSs corresponding to the plurality of channel BW segments.

In some demonstrative aspects, the receiver architecture may be configured to decode the data field of the PPDU, for example, by decoding the first transmission received over the first channel BW segment according to the first MCS corresponding to the first channel BW segment, and decoding the second transmission received over the second channel BW segment according to the second MCS corresponding to the second channel BW segment.

In some demonstrative aspects, device 102 and/or device 140 may be configured to implement a Low Density Parity Check (LDPC) architecture for processing a data field of a PPDU. For example, the LDPC architecture may be configured according to a flow of operations applied to MAC bits of the data field. For example, the flow of operations according to the LDPC architecture may include scrambling, which may be followed by encoding, which may be followed by stream parsing, which may be followed by constellation mapping, and/or one or more other functions before transmission.

In some demonstrative aspects, device 102 and/or device 140 may be configured to implement a Binary Convolutional Code (BCC) architecture for processing a data field of a PPDU. For example, the BCC architecture may be configured according to a flow of operations applied to MAC bits of the data field. For example, the flow of operations according to the BCC architecture may include scrambling, which may be followed by encoding, which may be followed by stream parsing, which may be followed by BCC interleaving, which may be followed by constellation mapping, and/or one or more other functions before transmission. For example, the multi-MCS channel BW segmentation may be applied with respect to the BCC architecture, for example, between the encoding and modulation operations. This may result in a different architecture and/or multiple copies of the functions, e.g., in order to control them independently.

In some demonstrative aspects, the LDPC and/or BCC architectures may be reused, for example, with some modifications, e.g., similar to an architecture for downlink MU transmissions. For example, a plurality of flows, e.g., according to the LDPC architecture and/or the BCC architecture, may be utilized for processing communication of a respective plurality of streams of the data field. For example, the plurality of streams may be configured for transmission to a same STA/AP over a plurality of channel BW segments.

In some demonstrative aspects, selection of the size (bandwidth) of the channel BW segments (sub-bands) to be utilized may be based on a tradeoff, e.g., of performance gain versus hardware complexity, signaling overhead and/or complexity, e.g., as described above.

In one example, a 320MHz total channel width may be divided into channel BW segments with a channel BW segment size of at least 20MHz. According to this example, potentially up to 16 20MHz sub-channel segments may be used.

In another example, the 320MHz channel BW may be divided into channel BW segments with a channel BW segment size of a smallest RU size, e.g., an RU of 26 subcarriers. According to this example, potentially up to 144 26-subcarrer RU sub-channels may be used.

In some demonstrative aspects, a multi-MCS channel BW segmentation utilizing smaller channel BW segments may support more control over the MCS selection per a smaller sub-channel> this configuration may have the potential for larger gains, for example, in case there is a mix of interference throughout the band. However, the use of smaller channel BW segments may result in an increase in the hardware complexity of the transmitter and/or the receiver; and/or the use of a larger number of sub-channels may result in a larger measurement and signaling overhead.

In some demonstrative aspects, device 102 and/or device 104 may be configured to communicate a data field of a PPDU according to a multi-MCS channel BW segmentation utilizing at least two selections of channel BW segment (sub-band) size, e.g., as described below.

In some demonstrative aspects, device 102 and/or device 104 may be configured to communicate a data field of a PPDU according to a multi-MCS channel BW segmentation where the full channel BW may not be required to be subdivided evenly, e.g., as described below.

In some demonstrative aspects, device 102 and/or device 104 may be configured to communicate a data field of a PPDU according to a multi-MCS channel BW segmentation utilizing no more than ten channel BW segments, e.g., as described below.

In some demonstrative aspects, device 102 and/or device 104 may be configured to communicate a data field of a PPDU according to a multi-MCS channel BW segmentation utilizing no more than five channel BW segments, e.g., as described below.

In some demonstrative aspects, device 102 and/or device 104 may be configured to communicate a data field of a PPDU according to a multi-MCS channel BW segmentation utilizing no more than three channel BW segments, e.g., as described below.

In some demonstrative aspects, device 102 and/or device 104 may be configured to communicate a data field of a PPDU according to a multi-MCS channel BW segmentation utilizing only two channel BW segments, e.g., as described below.

In one example, device 102 and/or device 104 may be configured to communicate a data field of a PPDU over a 80MHz channel BW, which may be subdivided into a first channel BW segment, e.g., including a 60MHz channel, and a second channel BW segment, e.g., including a 20MHz sub-channel.

In another example, device 102 and/or device 104 may be configured to communicate a data field of a PPDU over a 80MHz channel BW, which may be subdivided into a first channel BW segment, e.g., including a single 26 RU sub-channel, and a second channel BW segment, e.g., including a remaining portion of the 80MHz channel BW.

In some demonstrative aspects, device 102 and/or device 104 may be configured to communicate a data field of a PPDU according to a multi-MCS channel BW segmentation utilizing more than two channel BW segments, e.g., as described below.

In some demonstrative aspects, device 102 and/or device 104 may be configured to communicate a data field of a PPDU according to a multi-MCS channel BW segmentation utilizing more than five channel BW segments, e.g., as described below.

In one example, device 102 and/or device 104 may be configured to communicate a data field of a PPDU over a 80MHz channel BW, which may be subdivided into up to 36 channel BW segments, e.g., including up to 36 respective 26-tone RUs.

In some demonstrative aspects, increasing the count of channel BW segments may result in an increase in the overhead, and/or an increase in complexity of rate adaptation, e.g., as described below.

In some demonstrative aspects, a multi-MCS channel BW segmentation for a 320Mhz channel BW may be configured according to plurality of different channel BW segmentation schemes. For example, the plurality of different channel BW segmentation schemes may be configured according to different channel BW segment (sub-band) sizes and/or different numbers of channel BW segment (sub-channel), e.g., as follows:

**Table 1**

| Sub-channel size | Approximate Sub-channel bandwidth | Number per 320 MHz |
|---|---|---|
| Per OFDM subcarrier | 78kHz | 3984 |
| 26 RU | ∼2.5MHz | 144 |
| 26/52 RU mix | ∼5MHz | 96 |
| 106/26 RU mix | ∼10MHz | 48 |
| 243 RU | 20MHz | 16 |
| 484 RU | 40MHz | 8 |
| 996 RU | 80MHz | 4 |

For example, one channel BW segmentation scheme, e.g., according to a first line of Table 1, may include up to 3984 channel BW segments, e.g., according to a channel BW segment size of one OFDM subcarrier (tone). For example, the first channel BW segmentation scheme may be implanted to support MCS control on a per OFDM subcarrier (tone) basis, e.g., over the 3984 (~4k) tones. Accordingly, applying adaptive MCS control on a per-tone basis may result in relatively large overhead, e.g., depending on metrics used for feedback. For example, it may be possible that a large portion of gain would be attained, for example, by grouping tones to reduce the overhead.

For example, another channel BW segmentation scheme, e.g., according to a last line of Table 1, may include up to 4 channel BW segments, e.g., according to a channel BW segment size of a 996-tone RU.

For example, a complexity of controlling the MCS over the channel BW segments may increase, e.g., relatively quickly, for example, as the sub-channel size reduces.

In some demonstrative aspects, device 102 and/or device 104 may be configured to communicate a data field of a PPDU according to a multi-MCS channel BW segmentation utilizing a first channel BW segment, and a second channel BW segment. For example, the first channel BW segment may be configured to include a relatively wide sub-channel; and/or the second channel BW segment may be configured to include a relatively narrow sub-channel. For example, this multi-MCS channel BW segmentation may provide a technical solution having relatively low overhead and/or complexity.

For example, a multi-MCS channel BW segmentation utilizing a relatively small number of channel BW segments, e.g., as low as two channel BW segments, may provide a technical solution for many use cases and/or scenarios.

For example, in many use cases and/or scenarios, it may be more likely that a STA/AP may be experiencing interference or poor channel conditions on only a portion of the larger channel BW.

In such a situation, it may be advantageous to implement a multi-MCS channel BW segmentation utilizing a relatively narrow channel BW segment, e.g., a 20MHz sub-channel, with a relatively low MCS, e.g., over the portion of the channel BW experiencing interference or poor channel conditions. For example, a larger channel BW segment, e.g., covering a remaining portion of the channel BW, may be configured with a relatively higher MCS. For example, in such a case the devices may be incurring interference to an overlapping 20MHz OBSS only. For example, this configuration may be more efficient, for example, compared to a multi-MCS channel BW segmentation of a 320MHz channel width divided into 144 26 RUs.

In some demonstrative aspects, the multi-MCS channel BW segmentation technique may be expanded, for example, to support multiple sub-channels per transmission, for example, up to a maximum number of sub-channels.

In some demonstrative aspects, device 102 and/or device 104 may be configured to communicate a data field of a PPDU according to a multi-MCS channel BW segmentation utilizing more than two channel BW segments, for example, based on a level of complexity that is tolerable.

In some demonstrative aspects, device 102 and/or device 104 may be configured to communicate a data field of a PPDU according to a multi-MCS channel BW segmentation utilizing up to a maximum number of channel BW segments (sub-channels) per channel BW (channel transmission).

In one example, the maximum number of channel BW segments may be defined, preset, and/or preconfigured, for example, by a standard and/or a specification.

In one example, the maximum number of channel BW segments may be negotiated between a transmitter STA and a receiver STA, e.g., between an AP, e.g., an AP implemented by device 102, and a STA, e.g., a STA implemented by device 140.

For example, this configuration of the multi-MCS channel BW segmentation may provide a technical solution to support a significant reduction in hardware and/or signaling complexity, and/or in link adaptation control.

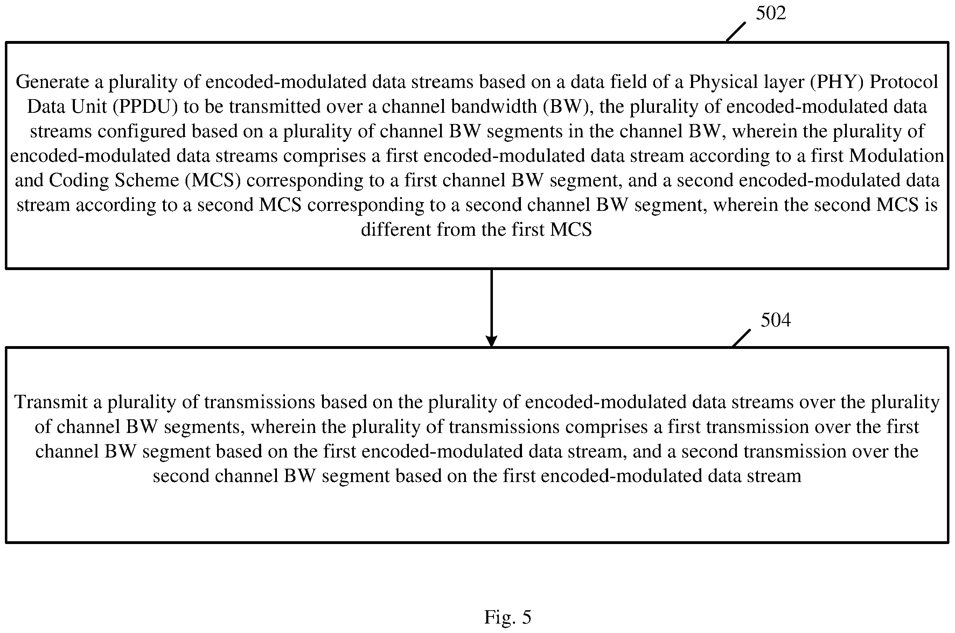

Reference is made to Fig. 5, which schematically illustrates a method of communicating a data field of a PPDU over a plurality of channel BW segments, in accordance with some demonstrative aspects. For example, one or more of the operations of the method of Fig. 5 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 502, the method may include generating at a STA a plurality of encoded-modulated data streams based on a data field of a PPDU to be transmitted over a channel BW. For example, the plurality of encoded-modulated data streams may be configured based on a plurality of channel BW segments in the channel BW. For example, the plurality of encoded-modulated data streams may include a first encoded-modulated data stream according to a first MCS corresponding to a first channel BW segment, and a second encoded-modulated data stream according to a second MCS, e.g., different from the first MCS, corresponding to a second channel BW segment. For example, controller 154 (Fig. 1) may be configured to cause, trigger, and/or control a STA implemented by device 140 (Fig. 1) to generate the plurality of encoded-modulated data streams based on the data field of the PPDU to be transmitted over the channel BW, e.g., as described above.

As indicated at block 504, the method may include transmitting a plurality of transmissions based on the plurality of encoded-modulated data streams over the plurality of channel BW segments. For example, the plurality of transmissions may include a first transmission over the first channel BW segment, e.g., based on the first encoded-modulated data stream, and a second transmission over the second channel BW segment, e.g., based on the first encoded-modulated data stream. For example, controller 154 (Fig. 1) may be configured to cause, trigger, and/or control the STA implemented by device 140 (Fig. 1) to transmit the plurality of transmissions based on the plurality of encoded-modulated data streams over the plurality of channel BW segments, e.g., as described above.

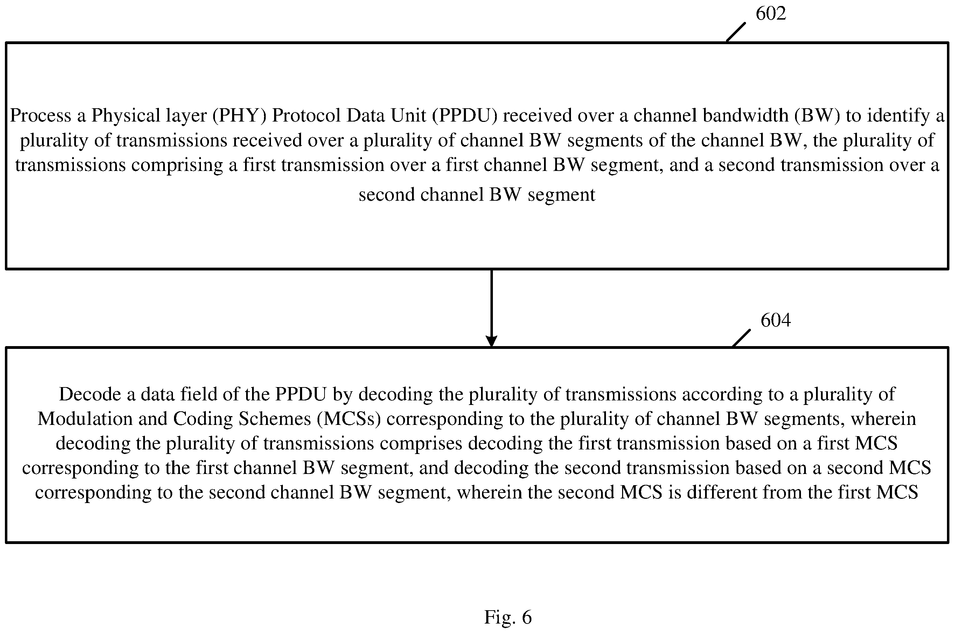

Reference is made to Fig. 6, which schematically illustrates a method of communicating a data field of a PPDU over a plurality of channel BW segments, in accordance with some demonstrative aspects. For example, one or more of the operations of the method of Fig. 6 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 602, the method may include processing at a STA a PPDU received over a channel BW to identify a plurality of transmissions received over a plurality of channel BW segments of the channel BW. For example, the plurality of transmissions may include a first transmission over a first channel BW segment, and a second transmission over a second channel BW segment. For example, controller 124 (Fig. 1) may be configured to cause, trigger, and/or control a STA implemented by device 102 (Fig. 1) to identify the plurality of transmissions received over the plurality of channel BW segments of the channel BW, e.g., as described above.

As indicated at block 604, the method may include decoding a data field of the PPDU, for example, by decoding the plurality of transmissions according to a plurality of MCSs corresponding to the plurality of channel BW segments. For example, decoding the plurality of transmissions may include decoding the first transmission based on a first MCS corresponding to the first channel BW segment, and decoding the second transmission based on a second MCS, e.g., different from the first MCS, corresponding to the second channel BW segment. For example, controller 124 (Fig. 1) may be configured to cause, trigger, and/or control the STA implemented by device 102 (Fig. 1) to decode the data field of the PPDU, for example, by decoding the plurality of transmissions according to the plurality of MCSs corresponding to the plurality of channel BW segments, e.g., as described above.

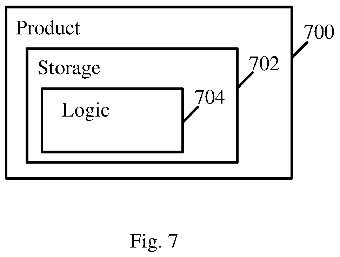

Reference is made to Fig. 7, which schematically illustrates a product of manufacture 700, in accordance with some demonstrative aspects. Product 700 may include one or more tangible computer-readable ("machine-readable") non-transitory storage media 702, which may include computer-executable instructions, e.g., implemented by logic 704, operable to, when executed by at least one computer processor, enable the at least one computer processor to implement one or more operations at device 102 (Fig. 1), device 140 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1); to cause device 102 (Fig. 1), device 140 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1) to perform, trigger and/or implement one or more operations and/or functionalities; and/or to perform, trigger and/or implement one or more operations and/or functionalities described with reference to the Figs. 1, 2, 3, 4, 5, and/or 6, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 700 and/or machine-readable storage media 702 may include one or more types of computer-readable storage media capable of storing data, including volatile memory, non-volatile memory, removable or non-removable memory, erasable or non-erasable memory, writeable or re-writeable memory, and the like. For example, machine-readable storage media 702 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 704 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 704 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a wireless communication station (STA) to generate a plurality of encoded-modulated data streams based on a data field of a Physical layer (PHY) Protocol Data Unit (PPDU) to be transmitted over a channel bandwidth (BW), the plurality of encoded-modulated data streams configured based on a plurality of channel BW segments in the channel BW, wherein the plurality of encoded-modulated data streams comprises a first encoded-modulated data stream according to a first Modulation and Coding Scheme (MCS) corresponding to a first channel BW segment, and a second encoded-modulated data stream according to a second MCS corresponding to a second channel BW segment, wherein the second MCS is different from the first MCS; and transmit a plurality of transmissions based on the plurality of encoded-modulated data streams over the plurality of channel BW segments, wherein the plurality of transmissions comprises a first transmission over the first channel BW segment based on the first encoded-modulated data stream, and a second transmission over the second channel BW segment based on the first encoded-modulated data stream.

Example 2 includes the subject matter of Example 1, and optionally, wherein the apparatus is configured to cause the STA to determine the first MCS based on an interference level over the first channel BW segment.

Example 3 includes the subject matter of Example 1 or 2, and optionally, wherein the apparatus is configured to cause the STA to determine the first MCS to be higher than the second MCS based on a determination that an interference level over the second channel BW segment is higher than an interference level over the first channel BW segment.

Example 4 includes the subject matter of any one of Examples 1-3, and optionally, wherein the apparatus is configured to cause the STA to set the first channel BW segment to include a channel BW segment having an interference level below an interference threshold, and to set the second channel BW segment to include a channel BW segment having an interference level above the interference threshold.

Example 5 includes the subject matter of any one of Examples 1-4, and optionally, wherein the first channel BW segment has a first predefined segment size, and the second channel BW segment has a second predefined segment size.

Example 6 includes the subject matter of any one of Examples 1-5, and optionally, wherein the apparatus is configured to cause the STA to transmit channel BW segment configuration information to indicate a configuration of the plurality of channel BW segments.

Example 7 includes the subject matter of Example 6, and optionally, wherein the channel BW segment configuration information comprises at least one of channel BW segment size information, channel BW segment count information, or channel BW segment allocation information.

Example 8 includes the subject matter of any one of Examples 1-7, and optionally, wherein the apparatus is configured to cause the STA to negotiate a configuration of one or more of the plurality of channel BW segments with another STA.

Example 9 includes the subject matter of any one of Examples 1-8, and optionally, wherein the apparatus is configured to cause the STA to transmit a capability indication to indicate a capability of the STA to communicate PPDUs according to a multi-MCS channel BW segmentation.

Example 10 includes the subject matter of any one of Examples 1-9, and optionally, wherein the apparatus is configured to cause the STA to configure a segment size of the plurality of channel BW segments to be equal to or greater than a predefined minimal channel BW segment size.

Example 11 includes the subject matter of any one of Examples 1-10, and optionally, wherein the apparatus is configured to cause the STA to transmit the first transmission according to a first transmit power, and to transmit the second transmission according to a second transmit power different from the first transmit power.

Example 12 includes the subject matter of any one of Examples 1-11, and optionally, wherein a channel BW segment of the plurality of channel BW segments comprises a frequency sub-channel having a sub-channel width of at least 20 Megahertz (MHz).

Example 13 includes the subject matter of any one of Examples 1-12, and optionally, wherein a channel BW segment of the plurality of channel BW segments comprises a frequency Resource Unit (RU).

Example 14 includes the subject matter of any one of Examples 1-13, and optionally, wherein the plurality of channel BW segments comprises a plurality of nonoverlapping channel BW segments of the channel BW.

Example 15 includes the subject matter of any one of Examples 1-14, and optionally, wherein the plurality of channel BW segments covers an entirety of the channel BW.

Example 16 includes the subject matter of any one of Examples 1-15, and optionally, wherein the first channel BW segment covers at least 50% of the channel BW.

Example 17 includes the subject matter of any one of Examples 1-16, and optionally, wherein the first channel BW segment covers at least 75% of the channel BW.

Example 18 includes the subject matter of any one of Examples 1-17, and optionally, wherein the plurality of channel BW segments comprises no more than 5 channel BW segments.

Example 19 includes the subject matter of any one of Examples 1-18, and optionally, wherein the plurality of channel BW segments comprises no more than 4 channel BW segments.

Example 20 includes the subject matter of any one of Examples 1-19, and optionally, wherein the plurality of channel BW segments comprises no more than 3 channel BW segments.

Example 21 includes the subject matter of any one of Examples 1-20, and optionally, wherein the plurality of channel BW segments comprises only 2 channel BW segments.

Example 22 includes the subject matter of any one of Examples 1-17, and optionally, wherein the plurality of channel BW segments comprises more than 5 channel BW segments.

Example 23 includes the subject matter of any one of Examples 1-22, and optionally, wherein the channel BW is at least 80 Megahertz (MHz).

Example 24 includes the subject matter of any one of Examples 1-23, and optionally, wherein the channel BW is at least 160 Megahertz (MHz).

Example 25 includes the subject matter of any one of Examples 1-24, and optionally, wherein the channel BW is at least 320 Megahertz (MHz).

Example 26 includes the subject matter of any one of Examples 1-25, and optionally, comprising at least one radio to transmit the PPDU.

Example 27 includes the subject matter of Example 26, and optionally, comprising one or more antennas connected to the radio, and a processor to execute instructions of an operating system.

Example 28 includes an apparatus comprising logic and circuitry configured to cause a wireless communication station (STA) to process a Physical layer (PHY) Protocol Data Unit (PPDU) received over a channel bandwidth (BW) to identify a plurality of transmissions received over a plurality of channel BW segments of the channel BW, the plurality of transmissions comprising a first transmission over a first channel BW segment, and a second transmission over a second channel BW segment; and decode a data field of the PPDU by decoding the plurality of transmissions according to a plurality of Modulation and Coding Schemes (MCSs) corresponding to the plurality of channel BW segments, wherein decoding the plurality of transmissions comprises decoding the first transmission based on a first MCS corresponding to the first channel BW segment, and decoding the second transmission based on a second MCS corresponding to the second channel BW segment, wherein the second MCS is different from the first MCS.

Example 29 includes the subject matter of Example 28, and optionally, wherein the first channel BW segment has a first predefined segment size, and the second channel BW segment has a second predefined segment size.

Example 30 includes the subject matter of Example 28 or 29, and optionally, wherein the apparatus is configured to cause the STA to process channel BW segment configuration information from a transmitter of the PPDU to identify a configuration of the plurality of channel BW segments.

Example 31 includes the subject matter of Example 30, and optionally, wherein the channel BW segment configuration information comprises at least one of channel BW segment size information, channel BW segment count information, or channel BW segment allocation information.

Example 32 includes the subject matter of any one of Examples 28-31, and optionally, wherein the apparatus is configured to cause the STA to negotiate a configuration of one or more of the plurality of channel BW segments with a transmitter of the PPDU.

Example 33 includes the subject matter of any one of Examples 28-32, and optionally, wherein the apparatus is configured to cause the STA to transmit a capability indication to indicate a capability of the STA to communicate PPDUs according to a multi-MCS channel BW segmentation.

Example 34 includes the subject matter of any one of Examples 28-33, and optionally, wherein the apparatus is configured to cause the STA to configure a segment size of the plurality of channel BW segments to be equal to or greater than a predefined minimal channel BW segment size.

Example 35 includes the subject matter of any one of Examples 28-34, and optionally, wherein a channel BW segment of the plurality of channel BW segments comprises a frequency sub-channel having a sub-channel width of at least 20 Megahertz (MHz).

Example 36 includes the subject matter of any one of Examples 28-35, and optionally, wherein a channel BW segment of the plurality of channel BW segments comprises a frequency Resource Unit (RU).

Example 37 includes the subject matter of any one of Examples 28-36, and optionally, wherein the plurality of channel BW segments comprises a plurality of nonoverlapping channel BW segments of the channel BW.

Example 38 includes the subject matter of any one of Examples 28-37, and optionally, wherein the plurality of channel BW segments covers an entirety of the channel BW.

Example 39 includes the subject matter of any one of Examples 28-38, and optionally, wherein the first channel BW segment covers at least 50% of the channel BW.

Example 40 includes the subject matter of any one of Examples 28-39, and optionally, wherein the first channel BW segment covers at least 75% of the channel BW.

Example 41 includes the subject matter of any one of Examples 28-40, and optionally, wherein the plurality of channel BW segments comprises no more than 5 channel BW segments.

Example 42 includes the subject matter of any one of Examples 28-41, and optionally, wherein the plurality of channel BW segments comprises no more than 4 channel BW segments.

Example 43 includes the subject matter of any one of Examples 28-42, and optionally, wherein the plurality of channel BW segments comprises no more than 3 channel BW segments.

Example 44 includes the subject matter of any one of Examples 28-43, and optionally, wherein the plurality of channel BW segments comprises only 2 channel BW segments.

Example 45 includes the subject matter of any one of Examples 28-40, and optionally, wherein the plurality of channel BW segments comprises more than 5 channel BW segments.

Example 46 includes the subject matter of any one of Examples 28-45, and optionally, wherein the channel BW is at least 80 Megahertz (MHz).

Example 47 includes the subject matter of any one of Examples 28-46, and optionally, wherein the channel BW is at least 160 Megahertz (MHz).

Example 48 includes the subject matter of any one of Examples 28-47, and optionally, wherein the channel BW is at least 320 Megahertz (MHz).

Example 49 includes the subject matter of any one of Examples 28-49, and optionally, comprising at least one radio to receive the PPDU.

Example 50 includes the subject matter of Example 49, and optionally, comprising one or more antennas connected to the radio, and a processor to execute instructions of an operating system.

Example 51 comprises a wireless communication device comprising the apparatus of any of Examples 1-50.

Example 52 comprises an apparatus comprising means for executing any of the described operations of any of Examples 1-50.

Example 53 comprises a product comprising one or more tangible computer-readable non-transitory storage media comprising instructions operable to, when executed by at least one processor, enable the at least one processor to cause a wireless communication device to perform any of the described operations of any of Examples 1-50.

Example 54 comprises an apparatus comprising: a memory interface; and processing circuitry configured to: perform any of the described operations of any of Examples 1-50.

Example 55 comprises a method comprising any of the described operations of any of Examples 1-50.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a wireless communication station (STA), the method comprising:
generating a plurality of encoded-modulated data streams based on a data field of a Physical layer (PHY) Protocol Data Unit (PPDU) to be transmitted over a channel bandwidth (BW), the plurality of encoded-modulated data streams configured based on a plurality of channel BW segments in the channel BW, wherein the plurality of encoded-modulated data streams comprises a first encoded-modulated data stream according to a first Modulation and Coding Scheme (MCS) corresponding to a first channel BW segment, and a second encoded-modulated data stream according to a second MCS corresponding to a second channel BW segment, wherein the second MCS is different from the first MCS; and
transmitting a plurality of transmissions based on the plurality of encoded-modulated data streams over the plurality of channel BW segments, wherein the plurality of transmissions comprises a first transmission over the first channel BW segment based on the first encoded-modulated data stream, and a second transmission over the second channel BW segment based on the first encoded-modulated data stream.

2. The method of claim 1 comprising determining the first MCS based on an interference level over the first channel BW segment.

3. The method of claim 1 or 2 comprising determining the first MCS to be higher than the second MCS based on a determination that an interference level over the second channel BW segment is higher than an interference level over the first channel BW segment.

4. The method of any one of claims 1-3 comprising setting the first channel BW segment to include a channel BW segment having an interference level below an interference threshold, and setting the second channel BW segment to include a channel BW segment having an interference level above the interference threshold.

5. The method of any one of claims 1-4 comprising transmitting channel BW segment configuration information to indicate a configuration of the plurality of channel BW segments.

6. The method of claim 5, wherein the channel BW segment configuration information comprises at least one of channel BW segment size information, channel BW segment count information, or channel BW segment allocation information.

7. The method of any one of claims 1-6 comprising negotiating a configuration of one or more of the plurality of channel BW segments with another STA.

8. The method of any one of claims 1-7 comprising transmitting a capability indication to indicate a capability of the STA to communicate PPDUs according to a multi-MCS channel BW segmentation.

9. The method of any one of claims 1-8 comprising configuring a segment size of the plurality of channel BW segments to be equal to or greater than a predefined minimal channel BW segment size.

10. The method of any one of claims 1-9 comprising transmitting the first transmission according to a first transmit power, and transmitting the second transmission according to a second transmit power different from the first transmit power.

11. The method of any one of claims 1-10, wherein a channel BW segment of the plurality of channel BW segments comprises a frequency sub-channel having a sub-channel width of at least 20 Megahertz (MHz), and/or a frequency Resource Unit (RU).

12. The method of any one of claims 1-11, wherein the first channel BW segment covers at least 50% of the channel BW.

13. An apparatus comprising means for causing a wireless communication station (STA) to perform the method of any one of claims 1-12.

14. The apparatus of claim 13 comprising at least one radio to transmit the PPDU, one or more antennas connected to the radio, and a processor to execute instructions of an operating system.

15. A product comprising one or more tangible computer-readable non-transitory storage media comprising instructions operable to, when executed by at least one processor, enable the at least one processor to cause a wireless communication station (STA) to perform the method of any one of claims 1-12.
